# EUROPEAN PATENT APPLICATION

(11) **EP 0 908 102 A2**
(43) Date of publication of application: **14.04.1999**
(21) Application number: 98830567.8
(22) Date of filing: 28.09.1998
(51) Int. Cl.: A21D 13/00, A21D 13/08

(54) **A salt dough and a sandwich prepared therefrom**

(30) Priority: 10.10.1997 IT RM970610
(71) Applicant: Foodinvest Group S.r.l., 64020 Teramo (IT)
(72) Inventor: Malavolta, Aristide Romano, 64020 Bellante Stazione, Teramo (IT); Maiorano, Antonio, 00144 Roma (IT)
(74) Representative: Cioncoloni, Enrico, Dr.

(57) **Abstract**

A salt oven base derived from that of the sponge-cake by the substitution of a portion of the sugar with salt and processed in such a way that it has the fundamental organoleptic characters of a bread of the type for sandwiches, except for a salt feature, and a sandwich prepared therefrom.

## Description

This invention relates to the field of foodstuffs.

More specifically, this invention relates to an oven base.

It also relates to a sandwich prepared from such an oven base.

It is known that sandwiches are prepared by cutting breads having a soft consistence and by filling the cut with a stuffing cream.

This invention takes its steps from the consideration that in an organoleptically advantageous manner some creams would match an oven base having a salt feature, though maintaining the taste, as well as the soft consistence and the cell structure of bread used for sandwiches. Such an oven base is still unknown in the field of marketable goods at the present day.

The object of this invention is to provide such an oven base for sandwiches which has such characteristics.

The inventors hereof have found, and in that consists the teaching of this invention, that this object can be reached from an oven base composition obtained through a suitable modification of the composition of sponge-cake, which, as is known, comprises flour, water and sugar.

More precisely, the sugar sweet component is acted upon, by partially substituting it with salt.

In the composition the presence is also provided of glucose syrup, having a fluidizing character by virtue of the fluency of the long molecules that make up it the ones on the others; of the egg, the yolk of which acts as a binder, and of starch.

Therefore, it is the subject of this invention an oven base composition characterized in that it includes:

| | |
|---|---|
| Flour | 40-50% |
| Plant fats | 5-20% |
| Extracts of cereals | 2-6% |
| Egg | 5-16% |
| Salt | 0.5-1.5% |
| Yeast | 1.5-2.5% |
| Starch | 2-5% |
| Malt | 1-3% |
| Water | 10-20% |

all the percentages being expressed by weight.

It is, moreover, the subject of this invention a process for the preparation of an oven base from the composition as set forth, characterized in that it includes the steps of:
(a) the preparation of a dough on the basis of the composition itself;
(b) the extrusion of said dough on a continuous belt;
(c) the passage in a leavening tunnel;
(d) an oven baking, and
(e) a cooling.

It is also the subject of this invention an oven base prepared by the process as set forth above.

It is finally the subject of this invention a sandwich obtained by cutting the oven base above and by pouring a stuffing cream on the made cut.

This invention will be better understood based on the following example given as a matter of exemplification, absolutely not of restriction.

Starting from a composition of an oven base including

| | |
|---|---|
| Flour | 40-50% |
| Plant fats | 5-20% |
| Extracts of cereals | 2-6% |
| Egg | 5-16% |
| Salt | 0.5-1.5% |
| Yeast | 1.5-2.5% |
| Starch | 2-5% |
| Malt | 1-3% |
| Water | 10-20% |

all the percentages being expressed by weight, a dough was prepared. By "dough" a mixture of flour, yeast and water is meant herein. The preparation was conducted at 3-5 °C for a time interval of 120 min. The dough was let to rise at 25 °C for 600 min. Thereafter a mixture was prepared at 25 °C for a time interval of 5 min in a kneader.

The obtained mixture was extruded or poured on a continuous belt.

Thereafter one proceeded to a rolling, carried out in three stages, which as a result gave thicknesses pregressively reduced to 20 mm, 10 mm and 5 mm respectively.

The rolled product was cut longitudinally, thereafter widened on parallel strips, according to a technology typical of the preparation of sponge-cake.

It was therafter made to pass in a leavening tunnel at 32 °C for a time interval included between 60 and 120 min, under relative hulidity conditions of 60%. Thereafter one proceeded to an oven baking for 15 min, up to a thickness of 30 mm.

The so obtained oven base was cooled at 25 °C for 5 min and cut in two layers continuously giving two thicknesses each one of 15 mm.

In the so obtained array of layers put side by side layers of odd order numbered in a given sense were upset; on the remaining layers of even order a stuffing cream was poured. Thereafter through suitably shaped guides a continuous upsetting of the odd layers on the stuffed even ones was caused; an operation followed by a transversal cutting, which as a result gave sandwiches. These ones were wrapped in a film and grouped in packs of a circular or rectangular type with a suitable number of items according to the intended market segment.

The obtained oven base, though not being a standard bread for both its composition and its manufacturing technology, turned out to have the soft consistence, the cell structure and the appearance of the bread used for stuffed rolls or "sandwichs", but it had a salt organoleptic characteristic.

The cream used for the stuffing was a cheese cream prepared according to the technology of milk creams with cold mixing of the ingredients, as well as emulsified, having a taste fit for its matching to that of the described oven base having the salt feature. The cream can be characterized with flavours fit for a salt sandwich, such as for instance herbs, pizza, salame, ham flavours.

A salt sandwich of such a type makes up a novelty in the field of the goods on the market.

It was found that a sandwich according to this invention showed a preservability of three or four weeks kept in the refrigerator.

The present invention has been described with reference to a specific embodiment thereof, but it is to be expressely understood that modifications, additions and/or omissions can be made, without so departing from the relevant scope of pretection, defined by the appended claims.

## Claims

1. An oven base composition characterized in that it includes:
| | |
|---|---|
| Flour | 40-50% |
| Plant fats | 5-20% |
| Extracts of cereals | 2-6% |
| Egg | 5-16% |
| Salt | 0.5-1.5% |
| Yeast | 1.5-2.5% |
| Starch | 2-5% |
| Malt | 1-3% |
| Water | 10-20% |
all the percentages being expressed by weight.

2. A process for the preparation of an oven base from the composition according to Claim 1, characterized in that it includes the steps of:
(a) the preparation of a dough on the basis of the composition itself;
(b) the extrusion of said dough on a continuous belt;
(c) the passage in a leavening tunnel;
(d) an oven baking, and
(e) a cooling.

3. An oven base prepared by the process according to Claim 2.

4. A sandwich obtained by cutting the oven base above and by pouring a stuffing cream on the made cut.
